# EUROPEAN PATENT APPLICATION

(11) **EP 1 074 931 A2**
(43) Date of publication of application: **07.02.2001**
(21) Application number: 00306622.2
(22) Date of filing: 03.08.2000
(51) Int. Cl.: G06F 17/60

(54) **Aircraft recommentdation program for air charter**

(30) Priority: 04.08.1999 US 147225 P; 28.07.2000 US 627646
(71) Applicant: Flighttime.Com, Inc., San Francisco, CA 94102 (US)
(72) Inventor: McCown, David E., San Francisco, CA 94117 (US); Scott, John W., San Francisco, CA 94117 (US); Onge, Ron S., New York, NY 10021 (US)
(74) Representative: Browne, Robin Forsythe, Dr.

(57) **Abstract**

Computer implemented methods and apparatus are described for identifying suitable charter aircraft for an itinerary. An aircraft database is queried for a first plurality of aircraft capable of servicing the itinerary. A mission cost value is determined for each of the first plurality of aircraft using a plurality of weighting factors. The mission cost value is quantified with a first type of unit, while selected ones of the weighting factors relate to parameters characterized by units different from the first type. A second plurality of aircraft is selected from among the first plurality of aircraft based on the associated mission cost values. At least one representation of the second plurality of aircraft is then presented.

## Description

### RELATED APPLICATION DATA

The present application claims priority from U.S. Provisional Patent Application No. 60/147,225 entitled AIRCRAFT RECOMMENDATION PROGRAM FOR AIR CHARTER filed on August 4, 1999, the entirety of which is incorporated herein by reference for all purposes.

### BACKGROUND OF THE INVENTION

The present invention relates generally to methods and apparatus for air charter travel, and more particularly, the present invention relates to methods and apparatus for identifying suitable aircraft for specific air charter itineraries.

Aircraft are chartered (sometimes referred to in the industry as air taxi) for a variety of convenience, productivity and pricing reasons, including: lack of scheduled commercial airline availability for desired dates of travel; the cost of commercial flights for certain itineraries; the travel departure and/or destination location(s) is not serviced by commercial airlines; or the duration of layovers for connecting commercial flights is not acceptable to the traveler. In spite of the many plausible reasons for air charter, this market remains largely untapped. The air charter industry to date has yet to provide a widely accessible automated tool which effectively informs customers that air charter is a viable option for their travel needs. Today charter flights are typically booked by directly contacting a charter airline or operator and making arrangements. Travelers will thus often book travel plans with commercial airlines without any idea that a more convenient and/or cost-effective charter plane could have been arranged to meet their travel needs.

Even where an individual is familiar and comfortable with air charter travel, most of the currently available air charter services do not efficiently match up suitable aircraft with itineraries defined by their customers. This is even the case with most web-based air charter services where one might expect otherwise.

Thus, there is a need for an itinerary flagging program that analyzes itineraries submitted to global distribution service systems, computer reservation systems and travel web sites and indicates to travelers when itineraries are suitable for air charter. In addition, there is a need, once such itineraries are identified, for an aircraft recommendation program which is capable of effectively and efficiently identifying suitable aircraft for the appropriate itineraries.

### SUMMARY OF THE INVENTION

According to the present invention, methods and apparatus are provided by which, given a specific itinerary, an aircraft that is both capable and suitable for the itinerary may be efficiently identified. According to a specific embodiment, the present invention determines, based on the itinerary requirements, which aircraft are "capable" of fulfilling that itinerary mission. Then the invention analyzes which aircraft among those determined as "capable" are most "suitable" to fulfill the mission.

To determine "capable" aircraft, the invention refers to actual aircraft performance specifications including, but not limited to: aircraft range, passenger capacity, luggage capacity, minimum runway requirements) as well as legal aspects (minimum runway length required by the FAA while the aircraft operate under Federal Aviation Regulations (FARs) for charter, international rules and regulations, landing permits, Customs port of entry requirements, minimum pilot rest requirements, over water flight equipment requirements, cabotage rules, etc.

To determine "suitable" aircraft, the invention analyzes aircraft features including, but not limited to: price, maximum comfort hours, maximum comfort passengers, time en route, amenities, customer aircraft, crew, air charter operator preferences as well as other preferences.

According to a specific embodiment, a web-based solution is provided in which a user enters a travel itinerary into a web interface from which an itinerary object is created. If the itinerary is determined to be appropriate for charter, the itinerary object is passed to an aircraft recommendation software program which queries an aircraft database to identify aircraft which are capable of fulfilling the itinerary. From among these, and based on a variety of weighting factors, the aircraft recommendation program then recommends the most suitable aircraft for the mission.

According to various embodiments, the various suitable aircraft are ranked according to a cost metric the value of which is derived from a variety of disparate metrics such as, for example, the number of passengers travelling, aircraft range, aircraft baggage and weight capacity, aircraft runway length requirements, aircraft location relative to mission parameters, aircraft availability, laws and regulations, pilot duty requirements, cost, flight time, comfort, and aircraft amenities. According to a more specific embodiment of the invention, changes to the itinerary may be suggested where there are conflicting itinerary parameters. Such suggested changes may include, for example, alternate airports, customs ports of entry for international itineraries, additional legs, and combinations of aircraft.

Thus, the present invention provides computer implemented methods and apparatus for identifying suitable charter aircraft for an itinerary. An aircraft database is queried for a first plurality of aircraft capable of servicing the itinerary. A mission cost value is determined for each of the first plurality of aircraft using a plurality of weighting factors. The mission cost value is quantified with a first type of unit, while selected ones of the weighting factors relate to parameters characterized by units different from the first type. A second plurality of aircraft is selected from among the first plurality of aircraft based on the associated mission cost values. At least one representation of the second plurality of aircraft is then presented.

A further understanding of the nature and advantages of the present invention may be realized by reference to the remaining portions of the specification and the drawings.

### BRIEF DESCRIPTION OF THE DRAWINGS

Fig. 1 is a diagram of an Itinerary Flagging Program (IFP) designed according to a specific embodiment of the present invention.

Fig. 2 is a flow diagram of an itinerary flagging program according to the present invention.

Figs. 2A and 2B are flow diagrams of an aircraft recommendation program designed according to a specific embodiment of the present invention.

Fig. 2C is a screen shot illustrating the output of an aircraft recommendation program according to a specific embodiment of the invention.

Fig. 3 is a flow diagram for applying the rules and weights of an itinerary flagging program to an itinerary to determine if it is suitable for air charter according to the present invention.

Fig. 4A through 4G are a series of diagrams illustrating exemplary rules and weights of an itinerary flagging program according to the present invention.

Figs. 5A through 5C are block diagrams of an itinerary flagging program used in various systems respectively according to the present invention.

Figs. 6 is system level block diagram of an itinerary flagging program in a reservation booking system used by a commercial airline according to the present invention.

Figs. 7A through 7D are a series of screen shots used to illustrate the operation of an itinerary flagging program according to the present invention.

### DETAILED DESCRIPTION OF SPECIFIC EMBODIMENTS

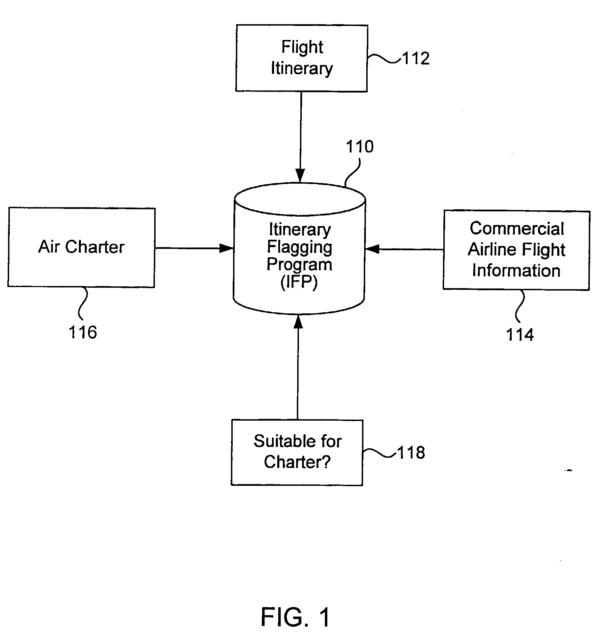

Referring to Fig. 1, a diagram of an Itinerary Flagging Program (IFP) 110 designed according to the present invention is shown. IFP 110 is a software module that intelligently analyzes a desired flight itinerary 112, commercial flight information 114 for fulfilling the itinerary 112 on a commercial airline, and air charter information 116 to determine if the flight itinerary 112 is suitable for air charter 118. IFP 110 includes a set of one or more weighted rules that are applied to the itinerary 112 to determine if it is suitable for air charter. According to one embodiment of the invention, these rules generally fall into three categories including convenience, productivity and price. Some exemplary rules for each category include:

### Convenience:

- Destinations per day
- Availability on scheduled airlines for requested dates
- Availability of scheduled commercial airlines within defined period of requested travel times
- No airports in the preferred departure or arrival locations that are scheduled by commercial airlines

### Productivity:

- Comparison of total time en route (including layovers for connecting flights) on scheduled commercial airlines versus total en route time for travel by air charter
- Class of travel (first class, business, or economy) requested by passenger(s).

### Price for all passengers in itinerary:

- Advanced purchase
- Cost per mile
- Travel city pairs
- Other defined departure or arrival points

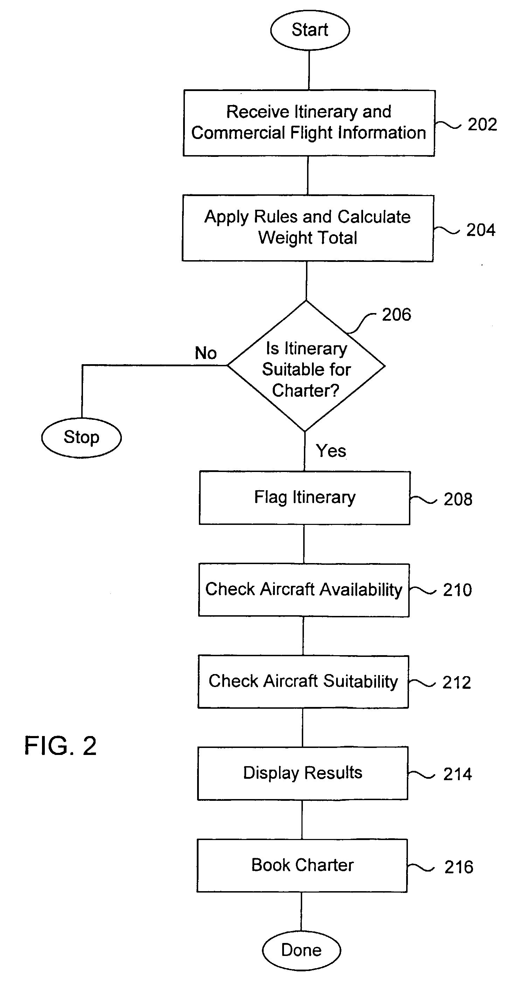

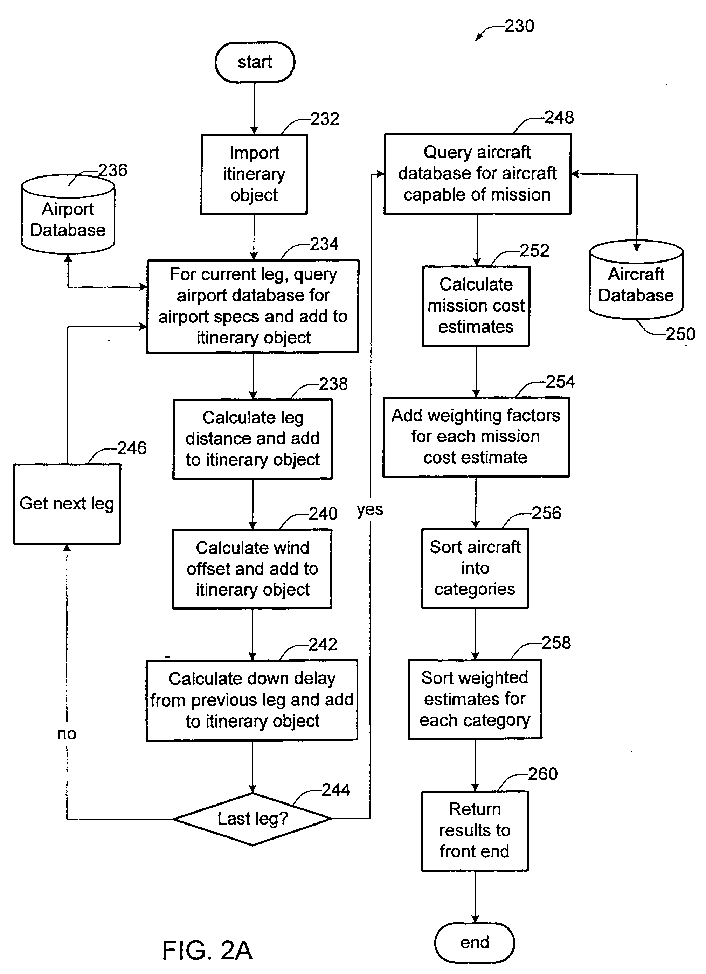

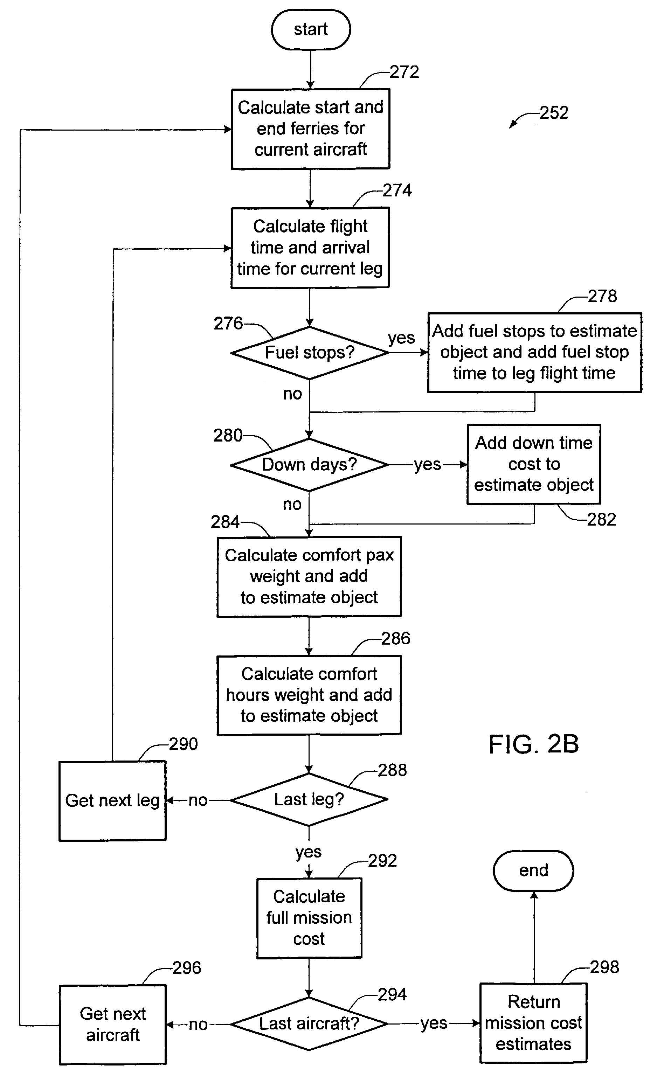

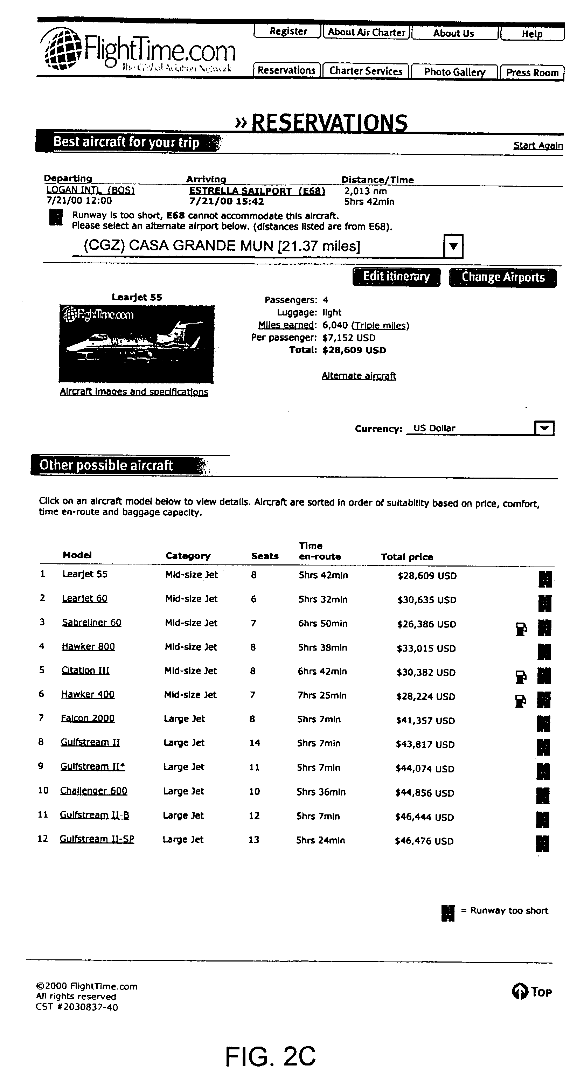

Referring to Fig. 2, a flow diagram of the itinerary flagging program 110 for air charter according to the present invention is shown. At the start of execution of IFP 110, IFP 110 receives the itinerary 112 and/or the commercial flight information 114 for the itinerary (202). The itinerary 112 includes the particulars for the trip, including one or more of the following: the number of passengers, class of travel, destination and departure locations, desired date and times of departures and arrivals. The rules of IFP 110 are applied and a weight total for the itinerary is calculated (204). IFP 110 then determines the suitability of a given itinerary for air charter based on the weight total (decision diamond 206). If the weight total does not meet or exceed a predetermined threshold, then IFP 110 determines that the itinerary is not suitable for air charter and the process ends.

On the other hand, if the weight total meets or exceeds the predetermined threshold, then the itinerary is flagged as suitable for air charter (208). In some embodiments of the invention, IFP 110 is complete once and itinerary is flagged as suitable for air charter or not. In other embodiments, IFP 110 may help locate a suitable air charter so it may be booked. In this situation, IFP 110 then accesses the air charter information 116 and checks aircraft availability (210) and the suitability of the available aircraft (212), and then displays the available and suitable aircraft along with cost and other pertinent information (214). Thereafter the traveler is provided the option of selecting and booking (216) one of the displayed aircraft that could be used to satisfy the itinerary. Once this sequence is completed, the IPF 110 is done for this itinerary.

According to various specific embodiments of the present invention, the functionality of 210-214 of Fig. 2 may be implemented with an aircraft recommendation program which intelligently recommends suitable aircraft for an air charter itinerary or, if appropriate, modifies the itinerary to accommodate available aircraft. Included among the factors considered in identifying aircraft capable of handling a particular itinerary are the number of passengers associated with the itinerary, aircraft range, aircraft baggage capacity and maximum weight limits, minimum runway length requirements for each aircraft, aircraft locations relative to itinerary locations, and aircraft availability.

Included among the factors considered in identifying or recommending the most suitable aircraft for a given itinerary are cost, flight time, comfort, and aircraft amenities. As alluded to above, identifying the most suitable aircraft may involve suggesting changes to itinerary parameters such as, for example, suggesting alternate airports, custom ports of entry for international itineraries, and additional legs or a combination of aircraft.

The aircraft recommendation program of the present invention queries a database for aircraft capable of servicing a particular itinerary and recommends the most suitable aircraft for the itinerary as well as any suggested changes to the itinerary where appropriate. This is accomplished by applying one or more weighting factors to any aircraft returned by the database query. In order to account for such disparate factors as price, time en-route, and comfort in the weight process, each such factor is converted to a dollar per hour value for each passenger associated with the itinerary. The weighting process also relies on a variety of independently compiled data codifying figures other than aircraft specs. Such data might include, for example, how many passengers can fly comfortably on a given aircraft as opposed to the aircraft's maximum carrying capacity.

As mentioned above, changes to an itinerary may be suggested where appropriate. This occurs where an itinerary parameter is inconsistent either with other itinerary parameters (e.g., the length of the flight is more amenable to larger aircraft but the destination airport runways can only handle smaller turboprop aircraft), or an otherwise suitable aircraft (e.g., an alternate airport might be suggested to handle a larger aircraft).

A specific embodiment of such an aircraft recommendation program 230 will now be described with reference to Figs. 2A and 2B. According to this embodiment, each parameter, cost, penalty, factor, etc., is quantified with a dollar value in order to make them compatible. It will be understood, however, that other ways of quantifying and combining these various factors may be employed without departing from the scope of the present invention. Referring to Fig. 2A, program 230 receives an itinerary object from the front end CGI (232). For each leg of the itinerary described by the itinerary object, program 230 queries airport database 236 for a variety of parameters associated with the airports corresponding to that leg and adds them to the itinerary object (234). According to various embodiments, such parameters may include, for example, name, airport code, city, state, country, landing fees, regulations, airport coordinates, runway lengths, time zones, etc.

The distance of each leg, any associated wind offsets (i.e., the effect of winds on aircraft speed and thus time en route), and down days (i.e., the number of days the aircraft waits idle on the ground between legs) from the previous leg are also determined and added to the itinerary object (238, 240, and 242). If there are additional legs (244), the next leg is retrieved (246) and the augmentation of the itinerary object continues in this manner until all of the legs of the itinerary are exhausted. Program 230 then queries aircraft database 250 for aircraft within a specified radius of start and end point locations which are capable of executing the mission (248). That is, program 230 performs a radius search for aircraft which can handle the itinerary described by the augmented itinerary object. According to various embodiments, this search is performed with reference to a variety of parameters including, for example, aircraft capacity, range, luggage capacity, and a parameter referred to herein as MaxComfort Flight Time. Although an aircraft may have a particular range, it may become increasingly uncomfortable to fly the aircraft beyond some set time en route approaching the maximum flight time established as reasonable. MaxComfort Flight Time indicates this maximum flight time.

Mission cost estimates are then determined for each aircraft identified in 248 (252). According to various embodiments, these cost estimates are calculated in dollar values using a variety of metrics represented in dollar values and dollar per hour values. The calculation of mission cost estimates according to a specific embodiment of the present invention is described below with reference to Fig. 2B. A variety of weighting factors are then applied to each estimate (254). According to various specific embodiments, such weighting factors include, for example, time en route (also referred to herein as FlightTime), Totalprice, comfortpax, comforthours, runwayerror, etc. The FlightTime factor is proportional to the total time en route, the total number of passengers, and a dollar value per hour weighting, i.e., the monetary worth of a person's time. The Totalprice factor relates to monetary cost. The comfortpax factor is used to calculate a penalty for each passenger in excess of a particular aircraft's comfortable passenger number (i.e., comfortpax), e.g., a Lear jet may be capable of carrying eight passengers, but may only carry five comfortably.

The comforthours factor is used to calculate penalty which is assessed if the actual flight time exceeds some predetermined flight time (i.e., comforthours) beyond which the flight in a particular aircraft is considered uncomfortable. According to a specific embodiment, the comfort weighting penalties are assessed on each leg of the itinerary. That is, for each leg of the itinerary a comfortpax penalty and a comforthours penalty are calculated, the former being proportional to the dollar value per hour weighting, the leg flight time, the number of passengers, and the extent to which the number of passengers exceeds comfortpax, the latter being proportional to the dollar value per hour weighting, the number of passengers, and the extent to which the leg flight time exceeds comforthours.

The runway error factor is a penalty which relates to the situation in which the aircraft is unable to land at the selected airport (as defined for charter operations by the FAA or an equivalent international body). For example, the penalty may be representative of the inconvenience and time associated with the necessity for the passengers to drive from an alternate airport to their final destination. According to a specific embodiment, this penalty is proportional to the driving distance and the dollar value per hour metric discussed above.

Referring back to Fig. 2A, the aircraft are then sorted into categories according to aircraft type (256), e.g., turboprop, small jet, medium jet, large jet, etc. For each such category the aircraft are then sorted according to the weighting (258). A programmable number of these sorted aircraft estimates are added to the itinerary object and the results are returned to the front end CGI for display (260). According to a specific embodiment, the number of results to be displayed for each category of aircraft is determined with reference to the length of the longest leg in the itinerary. Thus, for example, if the longest leg of the itinerary is less than or equal to 500 nautical miles and the number of aircraft to be displayed is 18, the program may determine to display among the aircraft search results 4 turboprops, 6 small jets, 5, medium jets, and 3 large jets.

One method of determining the mission cost estimates referred to in 252 of Fig. 2A will now be described with reference to Fig. 2B. Process 252 is performed for each aircraft identified in query 248 of Fig. 2A and an estimate object is returned to program 230. For the current aircraft, dollar value costs associated with the start and end ferry legs are calculated (272). As mentioned above, it will be understood that although dollar values are used in this specific example, other methods for quantifying the appropriateness of a particular aircraft may be used.

The actual flight and arrival time for the first leg of the itinerary is then determined with reference to the current aircraft (274). If there are any fuel stops necessary for this leg of the itinerary (276), the fuel stops are added to the estimate object and the fuel stop time is added to the total flight time for the leg (278). If there are any down days associated with the current leg (280), a down time cost is calculated and added to the estimate object (282).

According to a specific embodiment, the down time cost estimate is calculated in the following way. A standby cost is calculated which is a combination of the costs associated with maintaining the aircraft idle but available to the customer. According to various embodiments, this may include the number of standby hours charged at the aircraft's hourly rate, costs associated with paying pilots to remain idle but available, and costs associated with, for example, parking the aircraft overnight including food and lodging for the crew. A return-to-base round trip ferry cost is also calculated which may represent, for example, the cost of flying the aircraft back to its home base where it may be used for other flights and then returning to pick up the customer when they need to continue their journey. The lesser of the standby cost and the round trip ferry cost is then set as the down time cost estimate which is then added to the estimate object. According to a more specific embodiment, if the runway for this leg is too short, an additional runway error is added to the estimate object to account for the need for an alternate airport.

A comfortpax weight is calculated with reference to the difference between the comfortpax value for the current aircraft and the actual number of passengers associated with the itinerary and the result is included in the estimate object (284). Similarly, a comforthours weight is calculated with reference to the difference between the comforthours value for the current aircraft and the actual flight time of the current itinerary leg and the result is included in the estimate object (286). According to a specific embodiment, where these weights are greater than the set maximums, the quantified costs are added to the estimate thus making the aircraft less suitable for the mission. By contrast, where these calculated values are less than the set maximums, the quantified costs are subtracted from the estimate thus making the aircraft more suitable for the mission. If there are additional legs in the itinerary (288), the next leg is retrieved (290) and 274-286 are repeated for each subsequent leg.

When all of the itinerary legs have been processed in this manner (288), the total mission cost estimate for the current aircraft is calculated as a combination of all of the costs determined in 274 through 290 (292). Typically, there is a minimum charge due for use of an aircraft, e.g., 2 hours per day of service charged at the aircraft's hourly rate. According to a specific embodiment, if the actual flight time does not meet the minimum billable hours then a charge is assessed to bring the cost up to the minimum. According to a more specific embodiment, the daily minimum cost adjustment = (minimum billable hours - actual hours flown) * aircraft hourly rate.

If there are additional aircraft to be evaluated (294), the next aircraft is retrieved (296) and processed as described above with reference to 272 through 292. If all of the aircraft have been processed (294), the mission cost estimates for all of aircraft are returned to program 230 (298).

A web interface is shown in Fig. 2C in which the results of program 230, i.e., a list of suitable aircraft, are presented to the user as described above with reference to 214 of Fig. 2. As shown, a Learjet 55 is suggested as the best available aircraft for the itinerary. In addition, because the runway at the desired destination (i.e., Estrella Sailport) is not long enough for the Learjet 55 (or any of the suggested aircraft as indicated by the corresponding icons), the interface also suggests an alternate destination (i.e., Casa Grande Municipal Airport) and the distance between the two (i.e., 21.37 miles). Another icon used in the interface is a gas pump which indicates that the corresponding aircraft will require a stop for refueling.

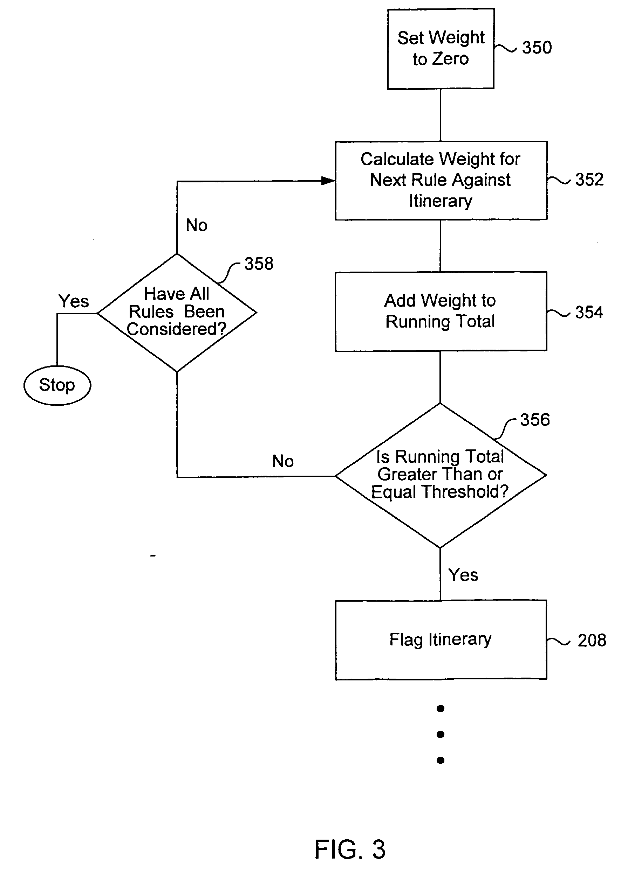

Fig. 3 is a flow diagram of the decision diamond 206 of IFP 110 used to determine the suitability of a given itinerary for air charter. At the start of the decision process, the weighting factor is initially set to zero (350). Next the itinerary is compared to the first rule and its weight is calculated (352). The weight is then added to the previous running weight total (354). In decision diamond 356, the running weight total is then compared to the predetermined threshold. If the running weight total is less than the predetermined threshold, then a check is performed if all of the rules have been considered (diamond 358). If all the rules have been considered and the running weight total is less than the predetermined threshold, then the itinerary is not suitable for air charter and flow of the IPF 110 stops. On the other hand, if additional rules need to be considered, then the above sequence is repeated for each outstanding rule. Whenever the running weight total exceeds the predetermined threshold, then the itinerary is flagged as suitable for charter (208 of Fig. 2).

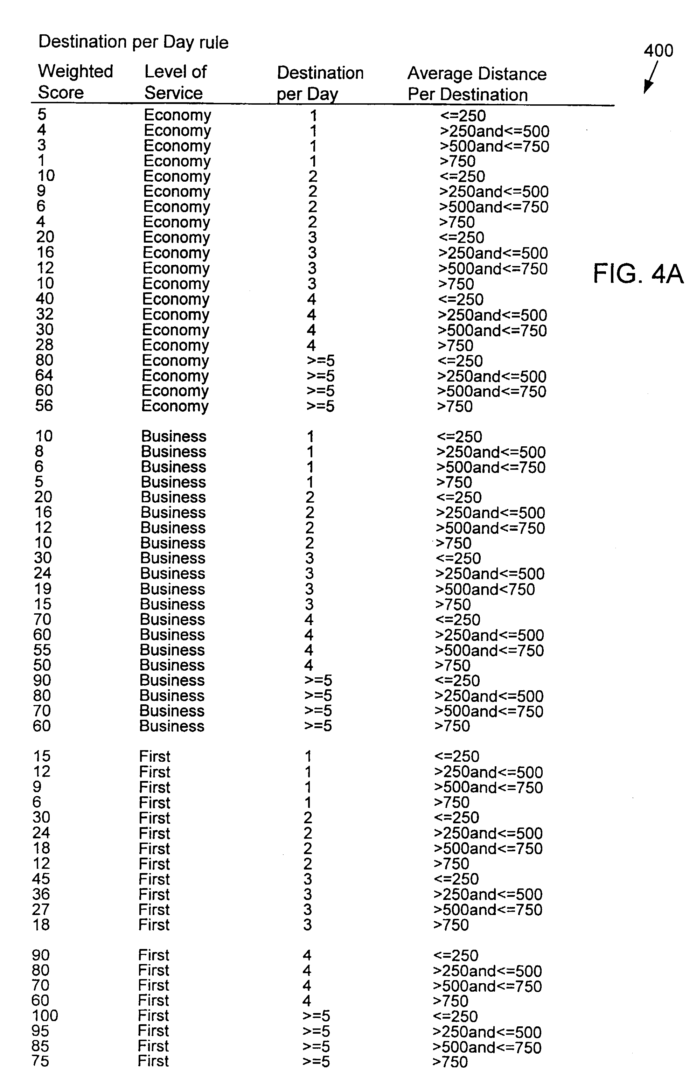

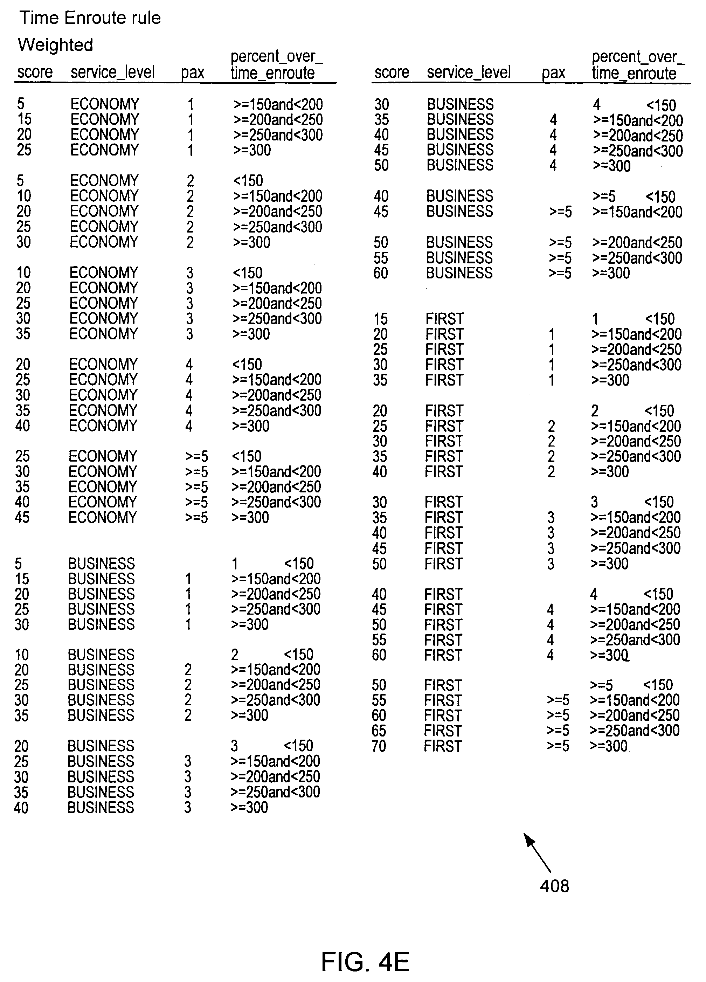

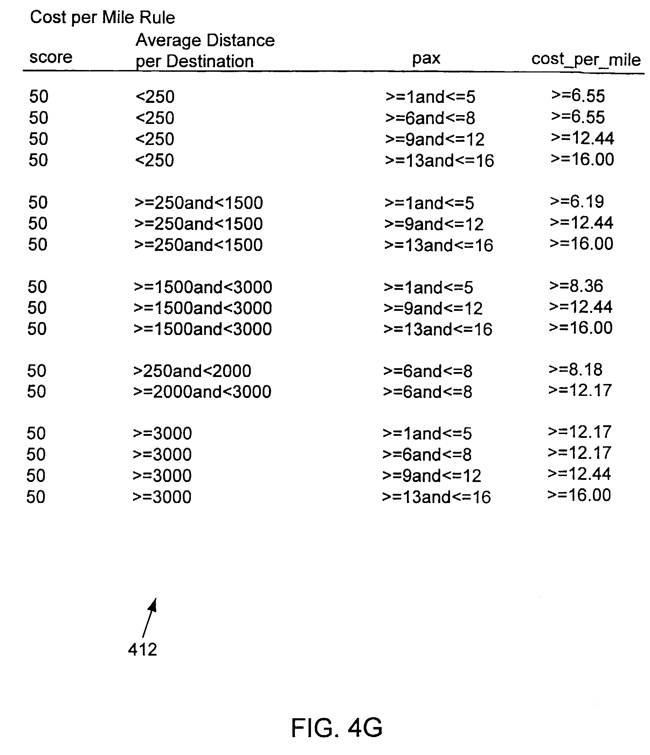

Referring to Figs. 4A-4G, a series of diagrams illustrating several exemplary rules are shown. Specifically convenience rules for "Destinations per Day", "No Availability of Commercial Flights Within X Hours of Requested Time", "No Availability of Commercial Flights on Date Requested" , and "No Airport at Selected Departure/destinations" are illustrated in Figs. 4A - 4D respectively. Productivity rules for "Time En-route and "Requested Class of Travel vs. Available Class of Travel" are illustrated in Figs. 4E-4F. Price rule "Cost per Mile" is illustrated in Fig. 4G. Each of these rules is described in detail below.

In Fig. 4A, a weight chart for the "Destinations per Day" rule according to the present invention is shown. The chart 400 includes columns for the weighted score, level of service (economy, business and first class), number of destinations per day (1 through 5), and the "average distance per destination" respectively. Within each class, the number of destinations (from 1 through greater or equal to 5) is designated along with four ranges of the average distance per destination (less than or equal to 250 miles, greater than 250 miles and less than or equal to 500 miles, greater than 500 miles or less than or equal to 750 miles, and greater than 750 miles) is provided. Charters are generally effective for making multiple stops between relatively close locations in a given day. Accordingly itineraries with multiple destinations within relatively close proximity of one another are given a higher weight score. On the other hand as the number of destinations per day decreases and the distance between the stops increases, the effectiveness of a charter decreases. Such itineraries are therefore given a relatively low score under this rule. For example, with four destinations per day in business class, the weighted score for the average distance per destination of less than or equal to 250 miles, greater than 250 miles and less than or equal to 500 miles, greater than 500 miles or less than or equal to 750 miles, and greater than 750 miles is "70", "60", "55" and "50" respectively.

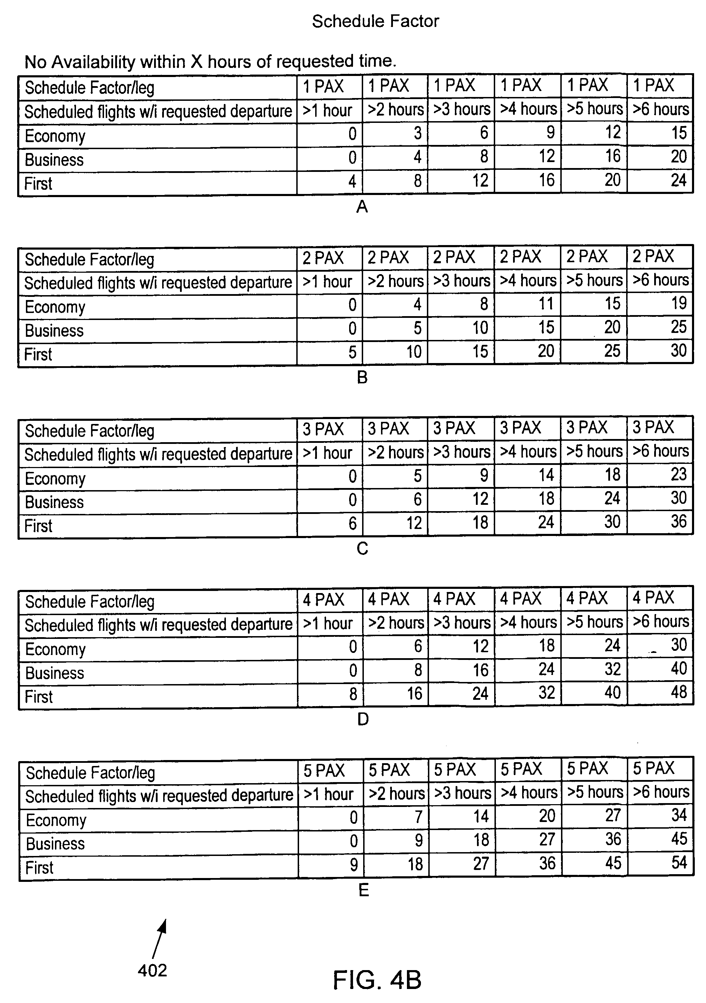

In Fig. 4B, the weight chart for "No Availability of Commercial Flights Within X Hours of Requested Time" is shown. This chart 402 includes rule tables (a-e) for one (1) through five (5) passengers respectively. Each table includes a different weight for economy, business and first class if a commercial flight is not available within (1, 2, 3, 4, 5, and 6 hours) respectively of the requested travel time. Since time is generally more important than cost savings for business and first class passengers, the weight score for first and business class passengers inconvenienced by the lack of availability of commercial flights is larger than for economy class. The weights also increase as the number of hours before a commercial flight is available increases. For example, if no commercial flight is available for five hours for three passengers traveling in business class, the weighted score would be twenty four (24). If this same itinerary included a second leg with a commercial flight not available for 3 hours, an additional score of twelve would be added making the total weight for this rule to equal thirty six (24+12=36).

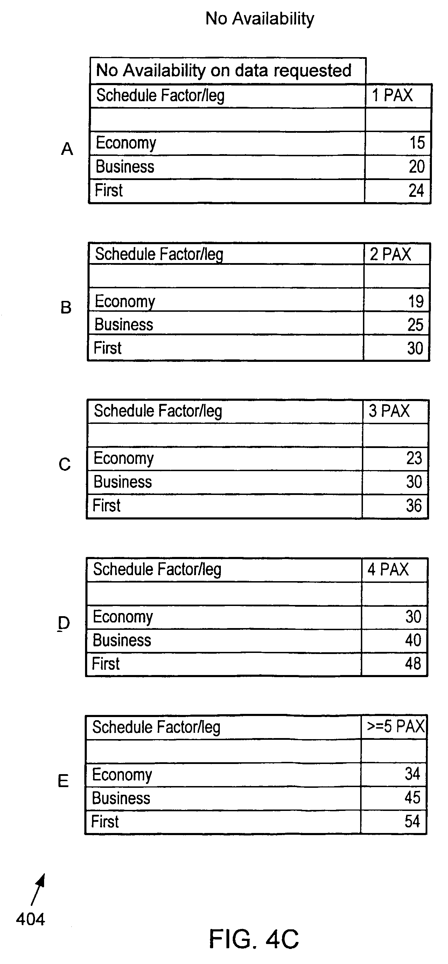

In Fig. 4C, the weight chart for "No Availability on Date Requested" is shown. This chart 404 includes rule tables (a-e) for one (1) through five (5) passengers respectively. Each table (a-e) includes a different weight for economy, business and first class if a commercial flight is not available on a requested date. For example, if a flight is not available on a requested travel date for two first class passengers, the weighted score is thirty (30). Again if an itinerary includes multiple legs where a flight is not available, the weight score is cumulative.

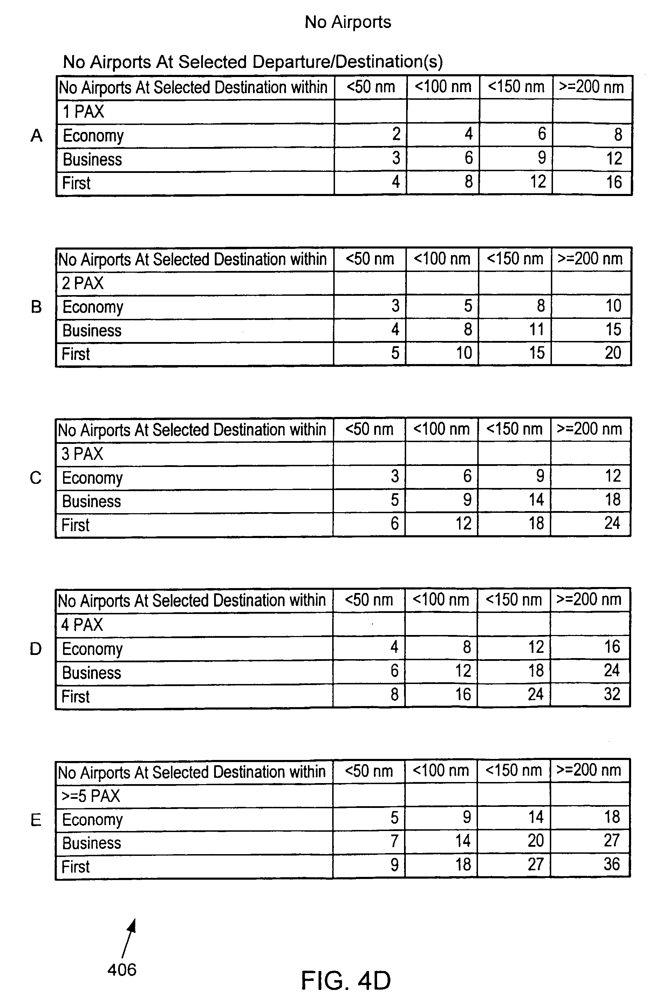

In Fig. 4D, the weight chart for "No Airports at Selected Departure/Destination(s)" is shown. This chart 406 includes rule tables (a-e) for one (1) through five (5) passengers respectively. Each table (a-e) includes a different weight for economy, business and first class if a requested airport departure/destination city is more than fifty (50), one hundred (100), one hundred and fifty (150), or greater than two hundred (200) nautical miles from the closest airport serviced by a commercial flight. For example, if an itinerary includes five (5) business class passengers and the closest airport serviced by a commercial airline is within one hundred and fifty (150) nautical miles away, the weight score for this rule is twenty (20). Again if an itinerary includes multiple departure/destination(s) where a flight is not available, the total weight for this rule is cumulative.

In Fig. 4E, the weight chart for the "Time En-route" rule is shown. This chart 408 includes a column of weighted scores, a service level column, a number of passengers (pax) column, and a percent over time en-route column. For each service class, the chart 408 includes a weighted score for the number of passengers (1 through 5) and for the percent over time en-route a charter will save versus a commercial flight. For example, the weighted score for one first class traveler is fifteen (15), twenty (20), twenty five (25), thirty (30), and thirty five (35) if the en-route time on a commercial flight compared to a charter is less than (150%), equal or greater than (150%) but less than (200%), greater or equal than (200%) but less than (250%), greater or equal than (250%) but less than (300%), and greater than (300%) respectively. Since first class and business class travelers are generally more concerned about convenience than cost, the weighted score for these travelers is greater than economy class and increases as the time savings of using air charter increases.

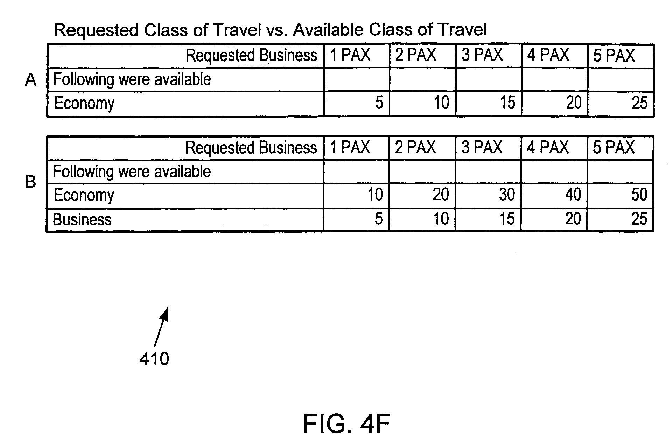

In Fig. 4F, the weight chart for the "Requested Class of Travel vs. Available Class of Travel" is shown. This chart 410 includes a first table (a) which is used when a traveler(s) requested business class and only coach class is available. In table (a), the weighted score is five (5), ten (10), fifteen (15), twenty (20), and twenty five (25) for one through five business class passengers respectively. The table (b) is provided for travelers that requested first class and only business or economy class is available. In this table, the weighted score for the availability of business class is five (5), ten (10), fifteen (15), twenty (20), and twenty five (25) for one through five first class passengers respectively. The weighted score when only economy is available is ten (10), twenty (20), thirty (30), forty (40), and fifty (50) for one through five first class passengers respectively.

In Fig. 4G, the weight chart for a cost per mile rule is shown. The chart 412 includes columns for the weighted "score", "average distance per destination", number of passengers ("pax"), and a "cost per mile" threshold respectively. The average distance per destination includes ranges of less than 250 miles, greater than or equal to 250 miles and less than 1500 miles, greater than or equal to 1500 miles and less than 3000 miles, greater than 250 miles and less than 2000 miles, less than or equal to 2000 miles and less than 3000 miles, and greater than or equal to 3000 miles. The cost per mile threshold varies depending on the number of passengers and the average distance between destinations. For example, with average distances between destinations of less than 250 miles, the cost per mile threshold is $6.55, $6.55, $12.44, and $16.00 for itineraries that include between one and five passengers, between six and eight passengers, between nine and twelve passengers, and between thirteen and sixteen passengers respectively. The cost per mile threshold increases as the number of passengers increases because generally a larger, more expensive, charter aircraft is needed to satisfy the itinerary. Also as the average distance per destination increases, a larger, more expensive, aircraft is also typically needed. It should be noted that the cost per mile threshold is arbitrarily set. In certain embodiments of the invention, it is set to a level sufficiently high for each (average distance-pax) combination so that every itinerary reviewed by the IPF is not selected for air charter. In other words, this rule is set to filter out itineraries satisfied by commercial airlines on a relatively cost effective basis. On the other hand if the cost per mile threshold is satisfied, meaning the cost of an air charter is less than or almost the same as a commercial flight, then the weighted score should be set to equal the predetermined threshold so the itinerary is automatically flagged. In an alternative embodiment, the actual cost per mile for charter can be compared to the actual cost per mile on a scheduled commercial flight. Again if the cost of a charter is less than the actual cost of the commercial flight per mile, then the itinerary should automatically be flagged.

It should be noted that the rules and weighted scores provided above are only exemplary and that they can be changed or modified. For example, other prices rules can be used such as a "risk pricing" program. This rule analyses various aspects of a customer itinerary request, and may sell a particular charter such as a one-way trip at or below cost price by not including the costs of the return leg. The charter may be sold at this reduced price because the charter operator may be willing to assume the risk that a buyer for the return leg can be found. As a consequence, any factor that increases the chance that a buyer for the return leg can be found can be used to offset the price to the original buyer. The aspects of an itinerary considered under this rule may include, but is not limited to: (a) distance of the empty leg. The greater the distance of an empty leg, the greater the chance the return flight can be sold to another party. Consider a one-way charter between San Francisco and New York. The chance that the return trip can be sold to another party located on the east coast, for example Boston, is much greater that a charter between two relatively close locations, for example St. Louis and Detroit. (b) advance purchase. The further in advance the purchase of the trip takes place before the actual trip, the more likely the empty leg can be sold to another customer; (c) valuable points of departure and arrival. The risk pricing rule recognizes certain geographical areas and city pairs are very popular and therefore there is a higher likelihood that a buyer for an empty leg can be found. As a result, the cost of the initial trip may be discounted based on the assumption a buyer for the empty leg will be found; (d) the type or category of selected aircraft. The risk pricing rule may consider the number (quantity) of a particular type or category of aircraft. For example, there are fewer Gulfstream jet aircraft than Learjet aircraft in the air charter fleet. Therefore, if a customer decides to book a charter on a Learjet aircraft, the chance of there being an available aircraft of this type in the relevant vicinity on the travel is higher than that of a Gulfstream jet. Therefore under the risk pricing rule, the Learjet aircraft maybe discounted relative to the Gulfstream aircraft; and (e) there are certain dates throughout the calendar year where availability of certain aircraft may be tighter than normal (high season-dates). These dates may therefore be discounted compared to an out-of-season date under the risk pricing rule. Since the risk pricing rule is likely to reduce the price for air charter, more travelers will be able to take advantage of this type of transportation. Thus air charter can become more affordable and can be feasible for a greater number of air travelers. Other rules that may be considered include but are not limited to a ride sharing rule for example.

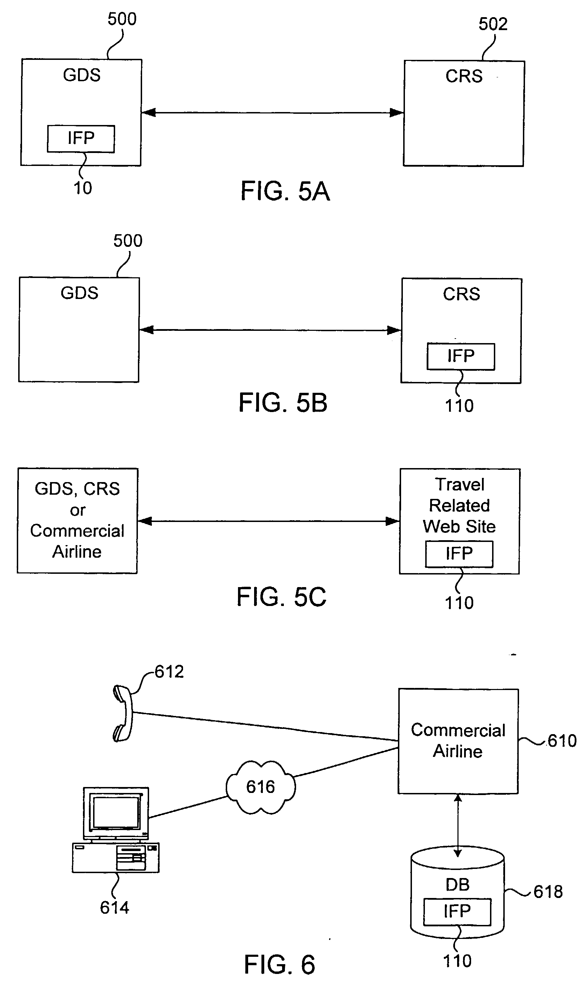

Figs. 5A and 5B are system level block diagrams of IFP 110 used with a standard Global Distribution Service (GDS) and a Computer Reservation System (CRS) according to two embodiments of the present invention. In one embodiment, IFP 110 can be used as a module integrated into a GDS system 500, such as SABRE or AMADEUS. GDS systems are large databases that contain flight and reservation information for one or more commercial airlines and are made available to members of the travel industry such as travel agents. Alternatively as illustrated in Fig. 5B, IFP 110 can reside at and flag itineraries at the CRS 502. By way of example, a traveler may inform a travel agent of plans to travel first class between San Francisco, Dallas and Boston on given departure and return dates. The agent in response enters this information into the GDS. The GDS then generates a list of commercial flights among the commercial airlines that accommodate the traveler's itinerary (i.e., the reply may include a three flights on United Airlines, five on American Airlines, and four on Delta Airlines along with the cost, and departure and arrival times for each flight). The traveler can then select the most suitable and the agent can then book the selected itinerary using the CRS 502. According to the embodiment of the Fig. 5A, IFP 110 resides on the GDS 500. Consequently as travel itineraries are entered to the GDS, the itineraries are analyzed and flagged in the manner described above. Alternatively the itineraries can be flagged at the CRS 502 when or prior to a reservation for a flight is made. With either embodiment, the traveler is notified that their travel plans may be better accommodated by chartering an aircraft rather than a scheduled commercial flight with the IPF 110. In Fig. 5C, a travel web site hosted by an application server with IFP 110 is shown. In this embodiment, IFP 110 flags itineraries when submitted to a GDS, CRS or a commercial airline over the Internet.

Figs. 6 is system level block diagram of IFP 110 used in a reservation booking system used by a commercial airline according to one embodiment of the present invention. As is common practice in the airline industry, a traveler may contact a commercial airline 610 (i.e., United, Delta, etc.) either directly using a telephone 612 or indirectly through a reservation booking web site hosted by the airline over the Internet 616 using a computer 614. With either situation, the commercial airline 610 accesses its reservation database 618 to check for the availability of flights and seats that meet the traveler's itinerary and provides the possible flights to the traveler. In yet another embodiment of the invention, IFP 110 can reside in the database 618. As travel queries are made to the database 618, IFP 110 can analyze and flag the itineraries where air charter may be suitable. The commercial airline can then inform the traveler of the suitable air charter options as an alternative to the commercial flight.

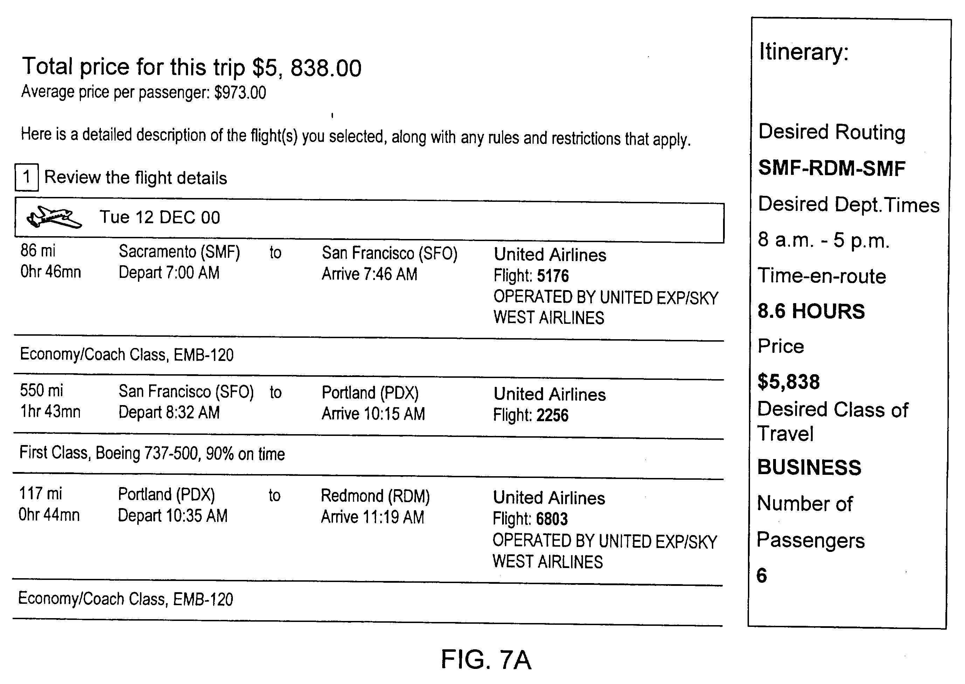

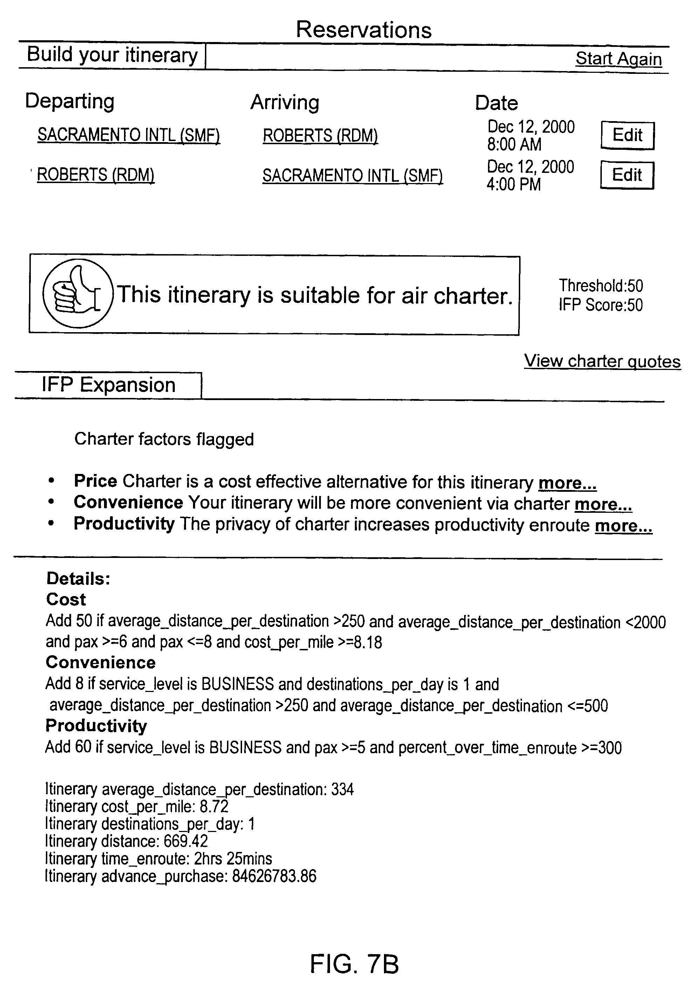

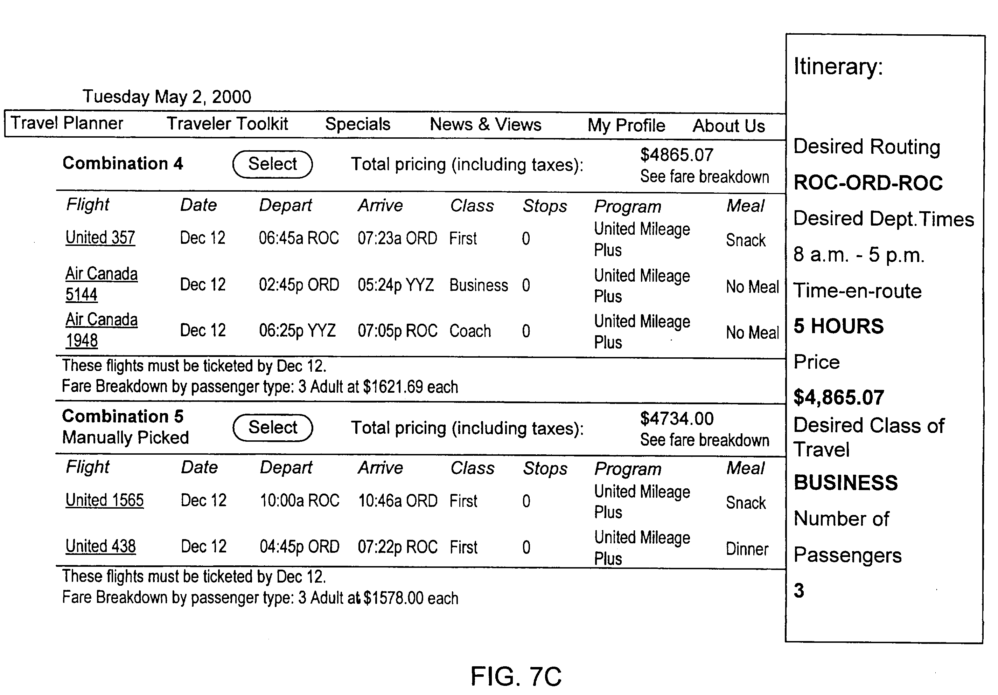

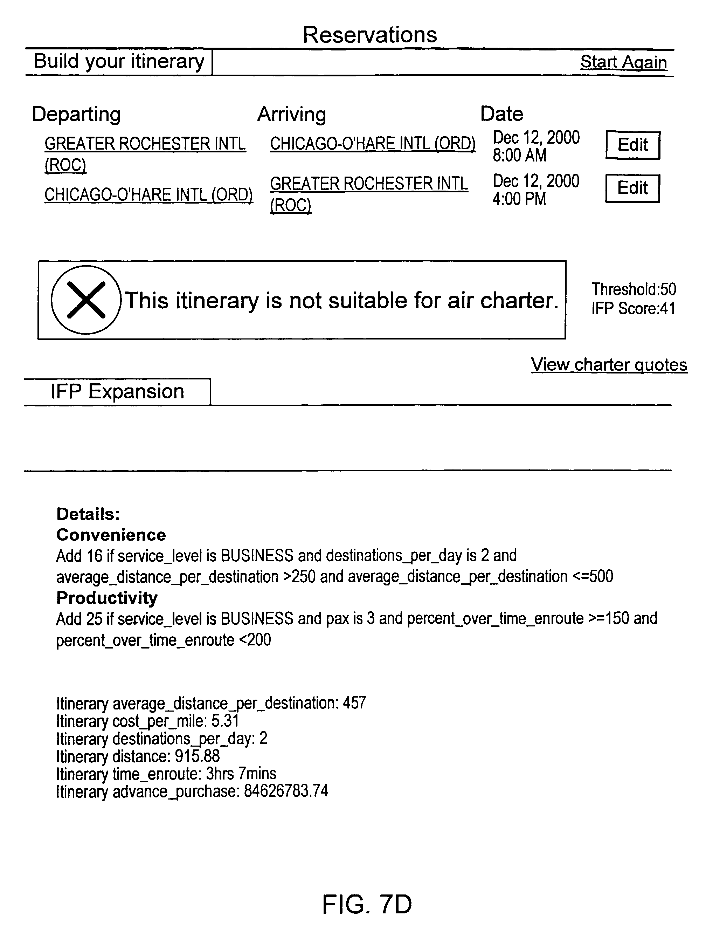

Referring to Figs. 7A through 7D, a series of screen shots illustrating operation of IFP 110 is shown. In Fig. 7A, a flight itinerary and a possible commercial flights on United Airlines satisfying the itinerary is provided. The particulars of the itinerary includes six business class passengers departing Sacramento and travelling on December 12, 1999 to San Francisco, Portland and Redmond with desired departure times between 8AM and 5PM. The Fig. also shows a commercial flight information 14 for United Airlines for satisfying the itinerary for a total cost of $5,838.00. Fig. 7B shows the results after IFP 110 has determined if the itinerary is suitable for air charter. In this example, IFP score (50) satisfies the predetermined threshold (50). Also displayed are the departing and final destination locations, the date and time of departure and arrival, and an explanation as to why the itinerary is suitable for air charter under the price, convenience and productivity rules described above. In Figs. 7C and 7D, two screen shots are shown where an itinerary is not flagged for air charter.

While the invention has been particularly shown and described with reference to specific embodiments thereof, it will be understood by those skilled in the art that changes in the form and details of the disclosed embodiments may be made without departing from the spirit or scope of the invention. For example, the aircraft recommendation program of the present invention has been described herein with reference to an itinerary flagging program and a web-based application. It will be understood, however, that the basic principles of the aircraft recommendation program may be implemented outside of these specific contexts without departing from the scope of the invention. Therefore, the scope of the invention should be determined with reference to the appended claims.

## Claims

1. A computer implemented method for identifying suitable charter aircraft for an itinerary, comprising:
querying an aircraft database for a first plurality of aircraft capable of servicing the itinerary;
determining a mission cost value for each of the first plurality of aircraft using a plurality of weighting factors, the mission cost value being quantified with a first type of unit, selected ones of the weighting factors relating to parameters characterized by units different from the first type;
selecting a second plurality of aircraft from among the first plurality of aircraft based on the associated mission cost values; and
presenting at least one representation of the second plurality of aircraft.

2. The method of claim 1 further comprising determining whether the itinerary is suitable for charter aircraft.

3. The method of claim 1 wherein querying the aircraft database comprises identifying specific aircraft in the aircraft database having aircraft parameters which match a plurality of itinerary parameters associated with the itinerary.

4. The method of claim 3 wherein the first plurality of aircraft includes at least one aircraft having at least one aircraft parameter conflicting with at least one of the itinerary parameters associated with the itinerary.

5. The method of claim 1 further comprising, prior to querying the aircraft database, modifying an itinerary object representative of the itinerary.

6. The method of claim 5 wherein modifying the itinerary object comprises adding airport information corresponding to the itinerary to the itinerary object.

7. The method of claim 5 wherein modifying the itinerary object comprises adding at least one itinerary leg distance to the itinerary object.

8. The method of claim 5 wherein modifying the itinerary object comprises adding at least one wind offset to the itinerary object.

9. The method of claim 5 wherein modifying the itinerary object comprises adding at least one down day penalty to the itinerary object.

10. The method of claim 1 wherein querying the aircraft database comprises performing a radius search to identify aircraft within a radius of at least one location associated with the itinerary.

11. The method of claim 11 wherein the at least one location comprises an end point location.

12. The method of claim 1 wherein determining the mission cost value for each of the first plurality of aircraft comprises adding a ferry cost to at least one of the mission cost values for which the associated aircraft has a ferry leg associated therewith.

13. The method of claim 1 wherein determining the mission cost value for each of the first plurality of aircraft comprises adding a flight time cost value to each mission cost value based on a flight time determined with reference to the itinerary.

14. The method of claim 1 wherein determining the mission cost value for each of the first plurality of aircraft comprises adding a fuel stop cost to selected mission cost values for which the associated aircraft requires at least one fuel stop.

15. The method of claim 1 wherein determining the mission cost value for each of the first plurality of aircraft comprises adding a down day cost to each mission cost value where at least one airport associated with the itinerary has at least one down day associated therewith.

16. The method of claim 1 wherein determining the mission cost value for each of the first plurality of aircraft comprises adding a comfort penalty to each mission cost value for which a number of passengers associated with the itinerary exceeds a passenger comfort value for the associated aircraft.

17. The method of claim 1 wherein determining the mission cost value for each of the first plurality of aircraft comprises adding a comfort penalty to each mission cost value for which a flight time associated with at least one leg of the itinerary exceeds a flight time comfort value for the associated aircraft.

18. The method of claim 1 further comprising, where the mission cost value for a specific one of the first plurality of aircraft is below a predetermined minimum, setting the mission cost value to the predetermined minimum.

19. The method of claim 1 further comprising dividing the second plurality of aircraft according into a plurality of aircraft categories.

20. The method of claim 19 wherein the plurality of aircraft categories comprises turboprop, small jet, medium jet, and large jet.

21. The method of claim 19 further comprising sorting the second plurality of aircraft within each aircraft category according to the associated mission cost values.

22. The method of claim 19 further comprising determining a display number for each of the aircraft categories with reference to a longest leg associated with the itinerary, the display number corresponding to a number of aircraft in each category for which representations are to be presented.

23. The method of claim 1 wherein the first type of unit comprises a monetary unit.

24. The method of claim 23 wherein the parameters relating to the selected weighting factors include at least one of a passenger number, an aircraft range, an aircraft baggage capacity, an aircraft weight capacity, a minimum runway length, an aircraft location relative to an itinerary location, aircraft availability, cost, flight time, comfort, and aircraft amenities, the selected weighting factors representing the parameters using the monetary unit.

25. The method of claim 1 wherein presenting the at least one representation of the second plurality of aircraft comprises indicating one of the second plurality of aircraft as a most suitable aircraft for the itinerary, the most suitable aircraft having a lowest mission cost value associated therewith.

26. A computer program product comprising a computer readable medium having computer program instructions stored therein for performing the method of claim 1.

27. A computer implemented method for identifying suitable charter aircraft for an itinerary, comprising:
determining whether the itinerary is suitable for charter aircraft;
querying an aircraft database for a first plurality of aircraft capable of servicing the itinerary;
determining a mission cost value for each of the first plurality of aircraft using a plurality of weighting factors, the mission cost value being quantified with a monetary unit, selected ones of the weighting factors relating to parameters characterized by non-monetary units;
selecting a second plurality of aircraft from among the first plurality of aircraft based on the associated mission cost values; and
presenting at least one representation of the second plurality of aircraft including indicating one of the second plurality of aircraft as a most suitable aircraft for the itinerary, the most suitable aircraft having a lowest mission cost value associated therewith.

28. A computer implemented method for identifying suitable charter aircraft for an itinerary, comprising:
determining whether the itinerary is suitable for charter aircraft;
querying an aircraft database for a first plurality of aircraft having aircraft parameters which match a plurality of itinerary parameters associated with the itinerary, each of the first plurality of aircraft being within a radius of at least one location associated with the itinerary;
determining a mission cost value for each of the first plurality of aircraft using a plurality of weighting factors, the mission cost value being quantified with a monetary unit, selected ones of the weighting factors relating to parameters characterized by non-monetary units, selected ones of the mission costs comprising at least one of a first comfort penalty for each passenger associated with the itinerary exceeding a passenger comfort value for the associated aircraft, and a second comfort penalty for each flight time associated with at least one leg of the itinerary which exceeds a flight time comfort value for the associated aircraft;
selecting a second plurality of aircraft from among the first plurality of aircraft based on the associated mission cost values; and
presenting at least one representation of the second plurality of aircraft including indicating one of the second plurality of aircraft as a most suitable aircraft for the itinerary, the most suitable aircraft having a lowest mission cost value associated therewith.
